# NEW EUROPEAN PATENT SPECIFICATION

(11) **EP 0 945 055 B2**
(45) Date of publication and mention of the opposition decision: **23.07.2008**
(45) Mention of the grant of the patent: 07.07.2004
(21) Application number: 99200630.4
(22) Date of filing: 04.03.1999
(51) Int. Cl.: A01J 5/017, A01J 5/007, A01J 7/04

(54) **A method of milking animals**
Verfahren zum Melken von Tieren
M?thode pour traire des animaux

(30) Priority: 23.03.1998 NL 1008672
(43) Date of publication of application: 29.09.1999
(73) Proprietor: MAASLAND N.V., 3147 PA Maassluis (NL)
(72) Inventor: van der Lely, Alexander, 3065 NA Rotterdam (NL); van den Berg, Karel, 2971 Br Bleskensgraaf (NL); de Groen, Franciscus Johannes Adrianus, 3225 CB Hellevoetsluis (NL)
(74) Representative: Corten, Maurice Jean F.M.

(56) References cited:
- EP-A- 0 043 264
- EP-A- 0 534 565
- EP-A- 0 728 412
- EP-A- 0 749 682
- WO-A1-99/35904
- DE-C- 3 044 445
- US-A- 4 011 838
- US-A- 5 419 280
- US-A- 5 697 323

## Description

The invention relates to a method of automated milking of animals, which method comprises a number of steps for milking the animals, such as milking and foremilking and/or cleaning the teats, etc., in which there are at least two variants for at least one step.

Such a method is known from EP-A-0749682. In the known method an animal is allowed to be milked or not after a defined period of time has elapsed. Said defined period of time may be constant or may be determined on the basis of data concerning the physical state of the animal and/or the quality of milk.

The invention aims at a method in which the animals are additionally stimulated during milking, in such a manner that milking is experienced as pleasant and an increased milk yield is to be expected.

According to the invention this is achieved in a method as defined in claim 1. In this manner the animal is prevented from falling into a repeated pattern. It has appeared in practice that, when applying such a method, the animals feel better and will consequently produce more milk.

It has appeared that some animals find it pleasant when one step is carried out periodically. Therefore, according to an inventive feature, for one variant the step is carried out periodically, while for another variant the step is carried out at random.

A further embodiment of the invention is defined in claim 3. The advantage of milking the animals in this manner is that the teat and the pulsation frequency are additionally stimulated by an alternating, non-predictable release-suction phase ratio, so that a better milk secretion is obtained.

Further embodiments of the invention are defined in claims 4 and 5. In this manner the animals are prevented from getting accustomed to the fact that e.g. a specific udder quarter is always the first to be milked or that a specific teat is always the first to be cleaned.

Further embodiments of the invention are defined in claims 2, 6 and 7.

## Claims

1. A method of automated milking of animals, which method comprises a number of steps for milking the animals, in which there are at least two variants for at least one step, for the at least one step a variant being chosen at random, e.g. by a random generator, which variant is subsequently carried out, **characterized in that** the method comprises varying the force with which a teat cup is pulled during milking of an animal, while between a lower and an upper limit value for the force with which is pulled a value is chosen at random by means of a random generator, whereafter the teat cup is pulled with said force by means of e.g. a withdrawal member.

2. A method as claimed in claim 1, **characterized in that** the estimated milking time is subdivided into periods of time and that per period of time there is determined at random a new value for the force with which the teat cup is pulled.

3. A method of automated milking of animals, which method comprises a number of steps for milking the animals, in which there are at least two variants for at least one step, for the at least one step a variant being chosen at random, e.g. by a random generator, which variant is subsequently carried out, **characterized in that** the method comprises automated milking of animals and **in that** the milking time is subdivided into periods of time and that per period of time there is defined a lower and an upper limit value for the pulsation frequency, as well as a release-suction phase ratio defined per pulsation frequency for the liner of a teat cup and in which by means of e.g. a random generator a value between e.g. 0 - 100 is chosen, which value corresponds to a pulsation frequency in a specific period of time, whereupon said pulsation frequency together with the pertaining release-suction phase ratio is set for that period of time, whereafter the above-mentioned procedure is repeated for a next period of time.

4. A method of automated milking of animals, which method comprises a number of steps for milking the animals, in which there are at least two variants for at least one step, for the at least one step a variant being chosen at random, e.g. by a random generator, which variant is subsequently carried out, in which method, for the purpose of connecting cleaning members for cleaning the teats of an animal, cleaning members are connected automatically to the teats of an animal by means of a milking robot, **characterized in that**, after the sequence in which the cleaning members are connected to the teats of an animal has been determined by means of a random generator, the cleaning members are connected to the teats by means of the milking robot.

5. A method of automated milking of animals, which method comprises a, number of steps for milking the animals, in which there are at least two variants for at least one step, for the at least one step a variant being chosen at random, e.g. by a random generator, which variant is subsequently carried out, **characterized in that** the method comprises cleaning the teats and/or the udder of an animal, in which, after a value for the cleaning intensity at which cleaning is effected has been determined by means of a random generator, this value is set with the aid of adjusting means for adjusting the cleaning intensity and subsequently the teats and/or the udder are/is cleaned with a cleaning device.

6. A method as claimed in any one of claims 1 - 5, **characterized in that** for one variant the step is carried out periodically, while for another variant the step is carried out at random.

7. A method as claimed in any one of claims 1 - 6, in which method, for the purpose of connecting teat cups for milking an animal, teat cups are connected automatically to the teats of an animal by means of a milking robot, **characterized in that**, after the sequence in which the teat cups are connected to the teats of an animal has been determined by means of a random generator, the teat cups are connected to the teats by means of the milking robot.

## Patentansprüche

1. Verfahren zum automatischen Melken von Tieren, wobei das Verfahren eine Anzahl von Verfahrensschritten zum Melken der Tiere umfasst, bei denen mindestens zwei Varianten für mindestens einen Verfahrensschritt zur Verfügung stehen, wobei für den mindestens einen Verfahrensschritt eine Variante durch Zufall, z. B. durch einen Zufallsgenerator, gewählt wird, wobei die Variante anschließend durchgeführt wird,
**dadurch gekennzeichnet, dass** das Verfahren das Verändern der Kraft umfasst, mit der ein Zitzenbecher während des Melkens eines Tieres zurückgezogen wird, wobei zwischen einem unteren und einem oberen Grenzwert für die Kraft, mit der gezogen wird, mit Hilfe eines Zufallsgenerators ein Wert nach dem Zufallsprinzip gewählt wird, wonach der Zitzenbecher mit dieser Kraft beispielsweise mit Hilfe eines Rückziehgliedes zurückgezogen wird.

2. Verfahren nach Anspruch 1,
**dadurch gekennzeichnet, dass** die geschätzte Melkzeit in Zeiträume unterteilt wird, und dass pro Zeitraum nach dem Zufallsprinzip ein neuer Wert für die Kraft festgelegt wird, mit der der Zitzenbecher zurückgezogen wird.

3. Verfahren zum automatischen Melken von Tieren, wobei das Verfahren eine Anzahl von Verfahrensschritten zum Melken der Tiere umfasst, bei denen mindestens zwei Varianten für mindestens einen Verfahrensschritt zur Verfügung stehen, wobei für den mindestens einen Verfahrensschritt eine Variante durch Zufall, z. B. durch einen Zufallsgenerator, gewählt wird, wobei die Variante anschließend durchgeführt wird,
**dadurch gekennzeichnet, dass** das Verfahren das automatische Melken von Tieren umfasst, und dass die Melkzeit in Zeiträume unterteilt wird, und dass pro Zeitraum ein unterer und ein oberer Grenzwert für die Pulsierfrequenz sowie ein Verhältnis zwischen Entspannungsphase und Ansaugphase pro Pulsierfrequenz für den Zitzengummi eines Zitzenbechers definiert werden, und wobei z. B. mit Hilfe eines Zufallsgenerators ein Wert zwischen beispielsweise 0 bis 100 gewählt wird, der einer Pulsierfrequenz in einem bestimmten Zeitraum entspricht, worauf die Pulsierfrequenz zusammen mit dem zugehörigen Verhältnis zwischen Entspannungsphase und Ansaugphase für diesen Zeitraum eingestellt wird, wonach das obengenannte Verfahren in einem darauffolgenden Zeitraum wiederholt wird.

4. Verfahren zum automatischen Melken von Tieren, wobei das Verfahren eine Anzahl von Verfahrensschritten zum Melken der Tiere umfasst, bei denen mindestens zwei Varianten für mindestens einen Verfahrensschritt zur Verfügung stehen, wobei für den mindestens einen Verfahrensschritt eine Variante durch Zufall, z. B. durch einen Zufallsgenerator, gewählt wird, wobei die Variante anschließend durchgeführt wird, wobei bei dem Verfahren zum Anschließen von Reinigungsgliedern zum Reinigen der Zitzen eines Tieres Reinigungsglieder mit Hilfe eines Melkroboters automatisch an die Zitzen eines Tieres angeschlossen werden,
**dadurch gekennzeichnet, dass** nach Festlegung der Reihenfolge, in der die Reinigungsglieder an die Zitzen eines Tieres angeschlossen werden, mit Hilfe eines Zufallsgenerators die Reinigungsglieder mittels des Melkroboters an die Zitzen angeschlossen werden.

5. Verfahren zum automatischen Melken von Tieren, wobei das Verfahren eine Anzahl von Verfahrensschritten zum Melken der Tiere umfasst, bei denen mindestens zwei Varianten für mindestens einen Verfahrensschritt zur Verfügung stehen, wobei für den mindestens einen Verfahrensschritt eine Variante durch Zufall, z. B. durch einen Zufallsgenerator, gewählt wird, wobei die Variante anschließend durchgeführt wird,
**dadurch gekennzeichnet, dass** das Verfahren das Reinigen der Zitzen und/oder des Euters eines Tieres umfasst, wobei nach Festlegung eines Wertes für die Reinigungsintensität zum Durchführen der Reinigung mit Hilfe eines Zufallsgenerators dieser Wert mit Hilfe einer Stellvorrichtung zum Einstellen der Reinigungsintensität eingestellt wird und anschließend die Zitzen und/oder das Euter mit einer Reinigungsvorrichtung gereinigt werden/wird.

6. Verfahren nach einem der Ansprüche 1 bis 5,
**dadurch gekennzeichnet, dass** für eine Variante der Verfahrensschritt in regelmäßigen Abständen durchgeführt wird, während für eine andere Variante der Verfahrensschritt nach dem Zufallsprinzip durchgeführt wird.

7. Verfahren nach einem der Ansprüche 1 bis 6,
bei dem zum Anschließen von Zitzenbechern zum Melken eines Tieres Zitzenbecher mit Hilfe eines Melkroboters automatisch an die Zitzen eines Tieres angeschlossen werden,
**dadurch gekennzeichnet, dass** nach Festlegung der Reihenfolge, in der die Zitzenbecher an die Zitzen eines Tieres angeschlossen werden, mit Hilfe eines Zufallsgenerators die Zitzenbecher mittels des Melkroboters an die Zitzen angeschlossen werden.

## Revendications

1. Méthode pour traire automatiquement des animaux, laquelle méthode comprend un certain nombre d'étapes pour traire les animaux, dans laquelle il y a au moins deux variantes pour au moins une étape, une variante étant sélectionnée de manière aléatoire pour la au moins une étape, par exemple par un générateur aléatoire, laquelle variante est effectuée par la suite, **caractérisée en ce que** la méthode comprend la variation de la force avec laquelle un gobelet trayeur est tiré pendant la traite d'un animal, tandis qu'une valeur, entre une valeur limite inférieure et une valeur limite supérieure pour la force de traction, est sélectionnée de manière aléatoire au moyen d'un générateur aléatoire, après quoi le gobelet trayeur est tiré avec ladite force au moyen par exemple d'un élément de retrait.

2. Méthode selon la revendication 1, **caractérisée en ce que** le temps de traite estimé est sous-divisé en des périodes et qu'une nouvelle valeur par période est déterminée de manière aléatoire pour la force avec laquelle est tiré le gobelet trayeur.

3. Méthode pour traire automatiquement des animaux, laquelle méthode comprend un certain nombre d'étapes pour traire les animaux, dans laquelle il y a au moins deux variantes pour au moins une étape, une variante étant sélectionnée de manière aléatoire pour la au moins une étape, par exemple par un générateur aléatoire, laquelle variante est effectuée par la suite, **caractérisée en ce que** la méthode comprend la traite automatique d'animaux et **en ce que** le temps de traite est sous divisé en des périodes et que des valeurs limites supérieure et inférieure sont définies pour la fréquence d'impulsions par période, ainsi qu'un rapport de phase de relâchement d'aspiration défini par la fréquence d'impulsions pour le manchon d'un gobelet trayeur et dans laquelle, au moyen par exemple d'un générateur aléatoire, une valeur entre par exemple 0 et 100 est sélectionnée, laquelle valeur correspond à une fréquence d'impulsions dans une période spécifique, sur quoi ladite fréquence d'impulsions conjointement au rapport de phase de relâchement d'aspiration correspondant sont établis pour cette période, après quoi la procédure susmentionnée est répétée pour une période suivante.

4. Méthode pour traire automatiquement des animaux, laquelle méthode comprend un certain nombre d'étapes pour traire les animaux, dans laquelle il y a au moins deux variantes pour au moins une étape, une variante étant sélectionnée de manière aléatoire pour la au moins une étape, par exemple par un générateur aléatoire, laquelle variante est effectuée par la suite, dans le but de connecter des éléments de nettoyage pour laver les trayons d'un animal, des éléments de nettoyage sont automatiquement connectés aux trayons d'un animal au moyen d'une trayeuse, **caractérisée en ce que**, après que la séquence où les éléments de nettoyage sont connectés aux trayons d'un animal a été déterminée au moyen d'un générateur aléatoire, les éléments de nettoyage sont connectés aux trayons au moyen de la trayeuse.

5. Méthode pour traire automatiquement des animaux, laquelle méthode comprend un certain nombre d'étapes pour traire les animaux, dans laquelle il y a au moins deux variantes pour au moins une étape, une variante étant sélectionnée de manière aléatoire pour la au moins une étape, par exemple par un générateur aléatoire, laquelle variante est effectuée par la suite, **caractérisée en ce que** la méthode comprend le nettoyage des trayons et/ou du pis d'un animal, dans lequel, après qu'une valeur pour l'intensité du nettoyage selon laquelle est effectué le nettoyage a été déterminée au moyen d'un générateur aléatoire, cette valeur est établie à l'aide de moyens d'ajustement pour ajuster l'intensité du nettoyage et les trayons et/ou le pis sont/est nettoyé(s) par la suite avec un dispositif de nettoyage.

6. Méthode selon l'une quelconque des revendications 1 à 5, **caractérisée en ce que** pour une variante l'étape est effectuée de manière périodique tandis que pour une autre variante l'étape est effectuée de manière aléatoire.

7. Méthode selon l'une quelconque des revendications 1 à 6, dans laquelle méthode, dans le but de connecter des gobelets trayeurs pour traire un animal, des gobelets trayeurs sont automatiquement connectés aux trayons d'un animal au moyen d'une trayeuse, **caractérisée en ce que**, après que la séquence où les gobelets trayeurs sont connectés aux trayons d'un animal a été déterminée au moyen d'un générateur aléatoire, les gobelets trayeurs sont connectés aux trayons au moyen d'une trayeuse.
